(19) Europäisches Patentamt
European Patent Office
Office européen des brevets

(11) **EP 3 751 944 B1**

(12) **EUROPEAN PATENT SPECIFICATION**

(45) Date of publication and mention
of the grant of the patent:
**02.03.2022 Bulletin 2022/09**

(21) Application number: **20184959.3**

(22) Date of filing: **07.01.2009**

(51) International Patent Classification (IPC):
**H04W 74/00** *(2009.01)*   **H04L 5/00** *(2006.01)*
**H04J 11/00** *(2006.01)*   **H04W 74/08** *(2009.01)*

(52) Cooperative Patent Classification (CPC):
**H04W 74/006; H04J 11/005; H04L 5/0048;**
**H04L 5/0094;** H04L 5/0053; H04W 74/0833

(54) **DEVICES AND METHODS FOR TRANSMITTING RANDOM ACCESS PREAMBLE**

VORRICHTUNGEN UND VERFAHREN ZUR ÜBERTRAGUNG EINER
DIREKTZUGRIFFSPRÄAMBEL

DISPOSITIFS ET PROCÉDÉS DE TRANSMISSION DE PRÉAMBULE D'ACCÈS ALÉATOIRE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **07.01.2008   CN 200810002414**

(43) Date of publication of application:
**16.12.2020   Bulletin 2020/51**

(62) Document number(s) of the earlier application(s) in
accordance with Art. 76 EPC:
**09700352.9 / 2 241 149**

(73) Proprietor: **Samsung Electronics Co., Ltd.
Suwon-si, Gyeonggi-do 443-742 (KR)**

(72) Inventors:
• **LI, Yingyang
Beijing, 100125 (CN)**
• **ZHANG, Yujian
Beijing, 100125 (CN)**
• **LI, Xiaoqiang
Beijing, 100125 (CN)**

(74) Representative: **Grünecker Patent- und
Rechtsanwälte
PartG mbB
Leopoldstraße 4
80802 München (DE)**

(56) References cited:
**US-A1- 2007 291 696**

• **"3rd Generation Partnership Project; Technical
Specification Group Radio Access Network;
Evolved Universal Terrestrial Radio Access
(E-UTRA); Physical Channels and Modulation
(Release 8)", 3GPP TS 36.211 V8.1-0, 1 November
2007 (2007-11-01), pages 1-54, XP055258239,
Retrieved from the Internet:
URL:https://portal.3gpp.org/desktopmodules
/Specifications/SpecificationDetails.aspx?
specificationId=2425 [retrieved on 2016-03-15]**
• **CMCC ET AL: "Way Forward on LTE TDD Frame
Structure", 3GPP DRAFT; R1-075020, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. Korea;
20071106, 6 November 2007 (2007-11-06),
XP050108467,**
• **TEXAS INSTRUMENTS: "Interference between
Sounding Reference Signal and Random Access
Preamble", 3GPP DRAFT; R1-074676, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. Korea;
20071030, 30 October 2007 (2007-10-30),
XP050108152, [retrieved on 2007-10-30]**
• **MOTOROLA: "RACH Frequency Hopping
Pattern", 3GPP DRAFT; R1-074606, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. Korea;
20071030, 30 October 2007 (2007-10-30),
XP050108091,**

EP 3 751 944 B1

**Description**

**BACKGROUND OF THE INVENTION**

**FIELD OF INVENTION**

The present invention relates to a wireless communication system, especially to a base station, a terminal and methods for transmitting and receiving random access preamble in a wireless communication system.

**DESCRIPTION OF PRIOR ART**

Now, the 3rd Generation Mobile Communication System Partnership Project (3GPP) standardization organization has commenced on Long-term Evolution (LTE) to the existing system criteria. Among many physical layer transmission techniques, both a downlink transmission technique based on Orthogonal Frequency Division Multiplexing (OFDM) and an uplink transmission technique based on Single Carrier Frequency Division Multiple Access (SCFDMA) are in hot spot to be researched.

In the following description, the sampling frequency is 30.72MHz by way of an example. In this case, when the interval between sub-carriers is 15KHz, the number of valid OFDM samples is 2048 and the sample interval is $T_s = 1/(15000 \times 2048)$ correspondingly. For other sampling frequencies, the corresponding number of valid OFDM samples and the number of CP samples can be obtained with proportion to the sampling frequency.

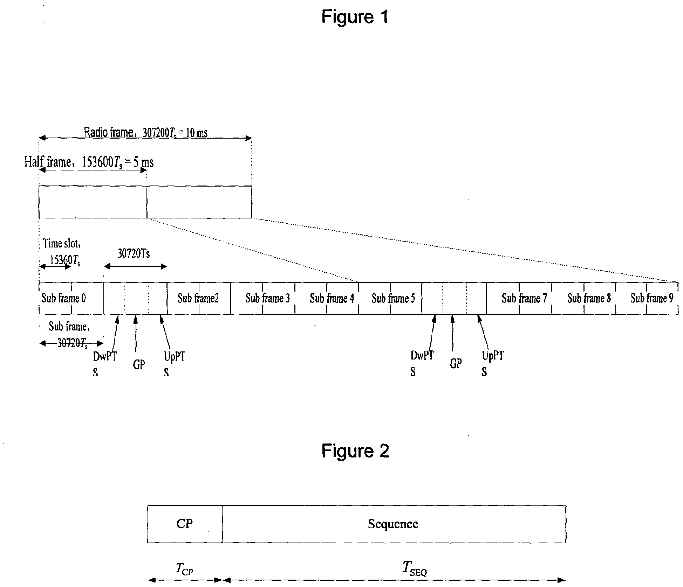

There are two types of frame structure in LTE system: Frame Structure Type 1 and Frame Structure Type 2. In frame structure type 1, the Frequency Division Duplex (FDD) mode is employed, and in frame structure type 2, the Time Division Duplex (TDD) mode is employed. Here, the LTE TDD system design is focused on. According to present discussion, figure 1 illustrates the frame structure of an LTE TDD system. A radio frame with a length of $307200 \times T_s$ = 10 ms for each one is equally divided into two half-frames with a length of $153600 \times T_s$ = 5 ms. Each half-frame contains eight slots with a length of $15360 T_s$ = 0.5 ms and three special domains, i.e., the downlink pilot time slot (DwPTS), the guard period (GP) and the uplink pilot time slot (UpPTS). The total length of said three special domains is $30720 T_s$ = 1ms. Each slot contains several OFDM symbols. There are two kinds of CP in OFDM symbols, viz., the general CP and the extended CP. A slot with the general CP contains 7 OFDM symbols and a slot with the extended CP contains 6 OFDM symbols. In the application of general CP, the CP in the first OFDM symbol of the slot is $160 \times T_s$ (about 5.21μs) long, and the CPs in the rest 6 OFDM symbols are $144 \times T_s$ (4.69μs) long; and in the application of extended CP, the CP

in each OFDM symbols of the slot is $512 \times T_s$ (16.67μs) long. Two continuous slots compose a subframe. Subframe 1 and subframe 6 contain said three special domains. According to present discussion, subframe 0, subframe 5 and the DwPTS are fixed for downlink transmission; for the transition period of 5ms, the UpPTS, subframe 2 and subframe 7 are fixed for uplink transmission; and for the transition period of 10ms, the UpPTS and subframe 2 are fixed for uplink transmission.

According to present discussion on LTE TDD, the uplink data, the random access preamble and the channel sensing reference signal (SRS) can be transmitted in the UpPTS. Figure 2 illustrates the structure of the random access preamble, which contains a circular prefix with a length of $T_{CP}$ and a sequence with a length of $T_{SEQ}$. At present, several structures of the preamble are defined in the table below:

Table 1: Parameters for the random access preamble

| The preamble format | $T_{CP}$ | $T_{SEQ}$ |
|---|---|---|
| 0 | $3152 \times T_s$ | $24576 \times T_s$ |
| 1 | $21012 \times T_s$ | $24576 \times T_s$ |
| 2 | $6224 \times T_s$ | $2 \times 24576 \times T_s$ |
| 3 | $21012 \times T_s$ | $2 \times 24576 \times T_s$ |
| 4 | $0 \times T_s$ | $4096 \times T_s$ |
| (only for the frame structure type 2) | | |

In table 1, the preamble format 4 is only applied to an LTE TDD system, the sequence length $T_{SEQ}$ of which is $4096 \times T_s$, which is equal to the time length of two uplink SCFDMA symbols; the CP length $T_{CP}$ of which is 0, i.e., no CP is added in said preamble. The feature of such format is that said random access preamble is short and generally transmitted in virtue of the UpPTS in an LTE TDD system. According to present discussion, the RACH signal in this format is transmitted in the position $5120 \times T_s$ prior to the stop of UpPTS. Therefore, in the receiving end of a BS, the random access preamble is transmitted within the time segment with a length of $5120 \times T_s$ prior to the stop of UpPTS. And in the following, the random access preamble transmitted through UpPTS is referred to as short RACH for short.

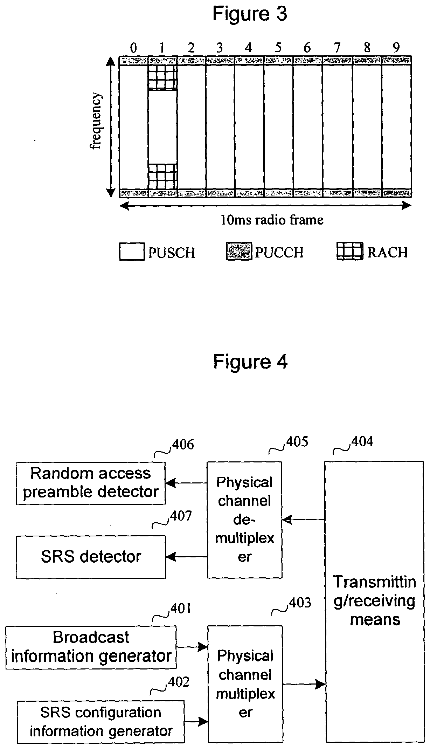

According to present discussion on LTE, the allocation of frequency band for uplink control channel (PUCCH) is implemented at the two ends of the band so as to avoid that the uplink shared data channel (PUSCH) is divided into multiple frequency bands by the PUCCH. The reason is that user equipments transmitting uplink data through multiple frequency bands with no frequency overlap will damage the single-carrier attribute, from which the increasing of cube metric (CM) is resulted. Figure 3 schematically shows the frequency locations of the RACH in an LTE FDD system. In each RACH's timing location, the two possible frequencies locate in the two ends of the system frequency band and are adjacent to PUCCH. This configuration is performed to avoid damaging PUSCH's single-carrier attribute. According to present discussion, in an LTE FDD system, only one access random channel resource can be configured for one RACH's timing location. And RACH's collision probability is controlled by configuring the RACH density in time domain. In order to obtain the frequency diversity effect, RACH implements frequency hopping between the two possible frequency locations illustrated in figure 3. For an LTE TDD system, it is possibly necessary to configure several random access channel resources for one RACH timing location to counteract the limitation of uplink downlink transition period.

It is a typical configuration that the UpPTS contains two SCFDMA symbols. In this case, the UpPTS can be adopted to transmit either the random access preamble in format 4 in table 1 or the SRS. Suppose one or more RACH resources have been configured in the UpPTS. To guarantee that RACH resources are orthogonal to SRS resources, the SRS can only be transmitted through the rest frequency resources. In present patent, a kind of RACH configuration method is proposed. With this method, not only the requirement of the format 4 for the random access preamble can be met, but also the transmission of SRS can be implemented effectively.

The publication of "3rd Generation Partnership Project: Technical Specification Group Radio Access Network; Evolved Universal Terrestrial Radio Access, E-UTRA; Physical channels and Modulation (Release 8)", 3Gpp TS 36.211 V8. 1-0, dated November 1, 2007, pages 1-54 refers to physical channels for evolved UGRA. Section 5.7 discloses physical random access channel and describes time and frequency structure of the physical layer random access preamble that consists of a cyclic prefix of length $T_{cp}$ and a sequence part of length $T_{SEQ}$. Section 5.5.3 refers to sounding reference signal.

The publication of CMCC ET AL: "Way Forward on LTE TDD Frame Structure", 3GPP DRAFT; R1-075020, 3rd Generation Partnership Project, 3GPP, Mobile Competence Centre; 650, Route Des Lucioles; F-06921 Sophia-Antipolis Cedex; France, vol. RAN WG1, no. Korea; 20071106, dated November 6, 2007 presents a proposal for an optimized frame structure.

The publication of TEXAS INSTRUMENTS: "Interference between Sounding Reference Signal and Random Access Preamble", 3GPP DRAFT; R1-074676, 3rd Generation Partnership Project, 3GPP, Mobile Mobile Competence Centre; 650, Route Des Lucioles; F-06921 Sophia-Antipolis Cedex; France, vol. RAN WG1, no. Korea; 20071030, dated October 30, 2007 refers to interference between sounding reference signal and random access preamble.

US 2007/0291696 A1 refers to a method and apparatus for performing random access in a wireless communication system.

The publication of MOTOROLA: "RACH Frequency Hopping Pattern", 3GPP DRAFT, R1-074606, 3rd Generation Partnership Project, 3GPP, Mobile Mobile Competence Centre; 650, Route Des Lucioles; F-06921 Sophia-Antipolis Cedex; France, vol. RAN WG1, no. Korea; 20071030, dated October 30, 2007 discusses frequency location and frequency hopping pattern of the PRACH.

## SUMMARY OF THE INVENTION

It is the object of the present invention to provide an improved apparatus and method for transmitting random access preamble in a wireless communication system.

This object is solved by the subject matter of the independent claims.

Preferred embodiments are defined by the dependent claims.

## BRIEF DESCRIPTION OF THE DRAWINGS

   Figure 1 shows the LTE TDD frame structure;
   Figure 2 shows the structure of the random access preamble;
   Figure 3 shows the random access channel's location in frequency domain;
   Figure 4 shows the device in BS for RACH and SRS processing;

Figure 5 shows the device in UE for RACH and SRS processing;
Figure 6 shows the device in BS for detecting several time division multiplexed RACHs;
Figure 7 shows the device in UE for transmitting several time division multiplexed RACHs;
Figure 8 illustrates the method for configuring RACH and SRS;
Figure 9 illustrates the method for configuring RACH;
Figure 10 illustrates the method for configuring RACH in time division multiplex mode;
Figure 11 shows the structure of short RACH with CP.

**DETAILED DESCRIPTION OF PREFERRED EMBODIMENTS**

The present disclosure provides a design method for the random access channel in an LTE TDD system, especially the design method for the random access preamble transmitted through UpPTS. Hereinafter, the random access preamble transmitted through UpPTS is referred to as the short RACH.

For an LTE TDD system, it is necessary to configure several RACH resources in one RACH timing location. Here, a RACH resource refers to the time frequency resource with frequency bandwidth of R and time length T. In an LTE system, R = 1.08MHz; T refers to the time interval occupied by the preamble. It is possible for a short RACH which is transmitted through UpPTS that a single short RACH resource could carry a fewer preambles. For instance, it is defined in the LTE TDD that it is necessary to provide 64 preambles by the physical layer to layer 2. If the number of preambles provided by each short RACH resource is less than 64, it is necessary for the physical layer to configure a plurality of short RACH resources to obtain the ability to support 64 preambles. In addition, if the load of the random access channel in the system is comparatively heavy, it is necessary to configure a plurality of RACH resources in one RACH timing location even though each RACH resource can provide 64 preambles.

The present disclosure describes three methods for configuring the random access channel in the following.

Method for configuring RACH and SRS

Similar to the discussion on LTE FDD system, in order to avoid damaging PUSCH's single-carrier attribute, only the frequencies on the two ends of the system frequency band can be allocated as RACH resources for an LTE TDD system. Particularly, there are two situations in the allocation. In one situation PUCCH is configured in the two ends of the system frequency band. In this case, the two backup locations for RACH resources are the frequency resource adjacent to PUCCH. In the other situation, no PUCCH is configured in the two ends of the system frequency band. In this case, the two backup locations for RACH resources are the boundaries of the system frequency band.

Now, the methods for allocating RACH resources in the RACH timing locations are described as follows.

In the first method, a plurality of RACH resources are distributed on the RACH backup resources at the two ends of the system frequency band as uniformly as possible for one RACH timing location. Suppose that the number of RACH resources necessary to be allocated at some RACH timing location is N, then $\left\lfloor \dfrac{N}{2} \right\rfloor$ and $\left\lceil \dfrac{N}{2} \right\rceil$ RACH resources are respectively allocated at the two ends of the system frequency band. Particularly, if N = 1, only one RACH resource is allocated at the RACH timing location and it locates at one end of the system frequency band; and If N > 1, at the RACH timing location, the RACH resources are distributed at the two ends of the system frequency band as uniformly as possible. This method is applicable to all five formats of the random access preamble listed in table 1. And with this method, RACH resources are uniformly distributed at the two ends of the frequency band so as to be advantage to frequency hop resource allocation for PUSCH. An important frequency hop method is the mirror image one, uniformly distributing the RACH resources at the two ends of the frequency band to reduce the constraints on PUSCH frequency hop. If it is necessary to transmit the random access preamble, UE selects one occupied RACH resource among the plurality of RACH resources distributed at the two ends of the system frequency band according to the currently configured RACH resource patterns in BS, generates the random access preamble and then multiplexes the generated preamble on the selected RACH resources for transmission. And according to the currently configured RACH resource patterns, the BS extracts the random access preamble from the plurality of RACH resources distributed at the two ends of the system frequency band and then detects the extracted random access preamble.

In the second method, $N_1$ RACH resources are continuously distributed at one end of the system frequency band for one RACH timing location; and $N_2$ RACH resources are continuously distributed in the other end of the system frequency band for the next RACH timing location. Suppose the number of the RACH resources to be allocated at the two continuous RACH timing locations is $N_1$ and $N_2$, respectively, and both of the $N_1$ and $N_2$ are greater than or equal to 1. In this way, the frequency domain distance between the RACH resources distributed in said two continuous RACH timing locations can be guaranteed to be maximal so that the probability of successful retransmission of the random access preamble from UE can be improved. If it is necessary to transmit the random access preamble, UE selects one unoccupied RACH resource among the plurality of continuous RACH resources at one end of the system frequency band according to the currently configured RACH resource pattern in BS and then occupies it, generates the random access preamble and then multiplexes the generated preamble on the selected RACH resource for transmission. And according to the currently configured RACH resource pattern, the BS extracts the random access preamble among the plurality of continuous RACH resources located at one end of the system frequency band and then detects the extracted random access preamble.

In the second method, it is applicable to all five formats of the random access preamble listed in table 1. For instance, to allocate RACH resources within the UpPTS with said method, no constraint is performed on the information transmitted through the frequencies rather than those occupied by RACH resources, i.e., said information can be uplink data, SRS, or uplink control information, and so on. Here, suppose all frequencies in UpPTS except for the one occupied by RACHs are adopted to transmit SRS. With said second method, the rest resources in UpPTS form continuous sub frequency channel, and the two continuous rest ones that contain RACHs locate at two ends of the system frequency band, respectively. In this case, if the frequency band occupied by the RACH resources is narrower than or equal to one half of the system frequency band, the rest resources in two UpPTSs can cover the entire system bandwidth so that this method supports to detect all channels with different frequencies on the system bandwidth. On these rest resources, the narrowband SRS can be transmitted; and if the bandwidth of broadband SRS is less than or equal to one half of the system bandwidth, the rest sub frequency-bands within two UpPTS can support to detect broadband channel for the entire system bandwidth. Moreover, if the bandwidth of the frequency band occupied by the RACH resources is greater than one half of the system frequency band, this second method supports to detect channel with the frequencies as more as possible in the system bandwidth. BS transmits the configuration information on SRS to UE, and UE transmits SRS via some frequency in the rest sub frequency band according to said configuration information transmitted by the BS.

For the first method mentioned above, if the number of the RACH resources to be allocated for the RACH timing location is more than two, it is necessary to continuously allocate several RACH resources at one end of the system frequency band. For the second method mentioned above, if the number of the RACH resources to be allocated for the RACH timing location is more than 1, it is necessary to continuously allocate several RACH resources at one end of the system frequency band. In general, in the method for continuously allocating RACH resources, the adjacent RACH resources occupy the adjacent resource blocks (RB). Suppose each RACH resource occupies R RBs. For instance, when some RACH resource occupies the $k \sim k + R - 1$ RBs, the adjacent RACH resource occupies the $k - R \sim k - 1$ RBs or the $k + R \sim k + 2R - 1$ RBs. If it is necessary to reduce interference between the RACH resources, said process of continuously allocating several RACH resources at one end of the system frequency band can be extended to allocate a plurality of RACH resources so that there are m RBs between the adjacent RACH resources (m >= 0). That m = 0 corresponds to the case of a method for normal continuous allocation. Suppose some RACH resource occupies the $k \sim k + R - 1$ RBs, then the adjacent RACH resource occupies the $k - R - m \sim k - 1 - m$ RBs or the $k + R + m \sim k + 2R - 1 + m$ RBs.

BS can indicate the currently configured RACH resource via the broadcast channel. And the system can predefine the configuration patterns for some RACH resource. By indexing said configuration patterns, only the index value is necessary to be transmitted via the broadcast channel.

Figure 4 shows the device for processing RACH and SRS in BS. Firstly, the broadcast information (401) for configuring RACH and the SRS configuration information (402) are generated by BS. Said two pieces of information are multiplexed by the physical channel multiplexer (403) to be transmitted through the transmitting/receiving means (404); then BS receives signal from UE through the transmitting/receiving means (404). The received signal is de-multiplexed through the physical channel de-multiplexer (405) according to the method proposed in present invention. And according to currently configured pattern on RACH resource in the BS, BS extracts the random access preamble from the plurality of continuous RACH resources located at one end of the system frequency band and detects the extracted random access preamble through module 406. When BS configures the frequencies other than those for RACH resources to transmit SRS, it extracts the SRS signal from the frequencies other than those for RACH resources and detects the extracted SRS through module 407.

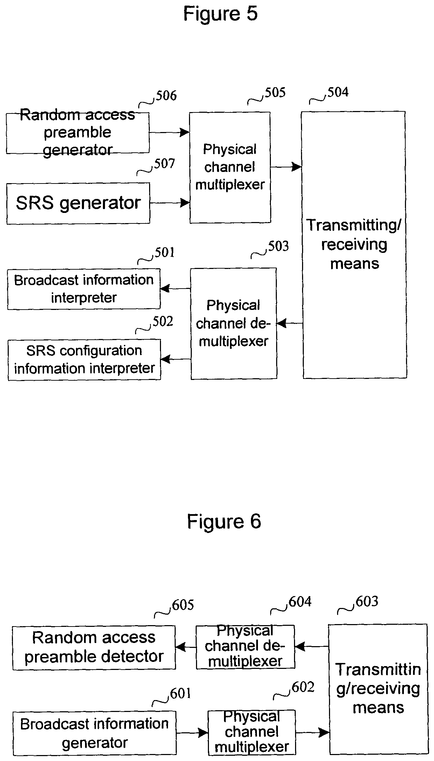

Figure 5 shows the device for processing RACH and SRS in UE. Firstly, UE receives signal from BS through the transmitting/receiving means (504). The received signal is de-multiplexed through the physical channel de-multiplexer (503) and the broadcast information (501) on RACH configuration and SRS configuration information (502) are obtained. Then, if it is necessary to transmit the random access preamble, UE selects its occupied RACH resources from the plurality of continuous ones at one end of the system frequency band according to currently configured RACH resource configuration pattern. Now, the random access preamble is generated in the module 506. After multiplexed by the physical channel multiplexer (505) into the selected RACH resources, the preamble is transmitted through the transmitting/receiving means (504). In the case that BS configures the frequencies other than those for RACH resources to transmit SRS, UE generates SRS in module 507, multiplexes it into the BS's configured frequencies through the physical channel multiplexer (505), and then transmits it through the transmitting/receiving means (504).

**Method for configuring multiple RACH resources in UpPTS**

In some configuration cases in an LTE TDD system, the UpPTS contains more than two SCFDMA symbols. For instance, to be backward compatible with TD-SCDMA, the UpPTS can contain 2, 6, 7, or 11 symbols. In the preamble format 4 in table 1, the time length is $5120 \times T_s$, which is equal to the length of 2.5 SCFDMA symbols. Suppose some short RACHs have been transmitted via the UpPTS, then within the sub frequency-band for RACH, the short RACHs only occupy part of the SCFDMA symbols. For example, when the UpPTS contains 6 symbols, three or four SCFDMA symbols within the sub frequency-band for RACH will be idle. In present invention, it provides a method in the following on how to utilize these remaining time frequency resources.

If it is necessary to configure a plurality of RACH resources in a UpPTS and the UpPTS contains comparatively many symbols, the present invention provides a solution of multiplexing a plurality of RACH resources in the UpPTS in time division multiplex mode. Here, no constraint is declared on whether BS is allowed to schedule resources occupied by RACHs to UE for uplink data transmission or not. If it is necessary here to guarantee that RACH resources are orthogonal to other resources (such as SRS, uplink data and so on), only the SCFDMA symbols other than those for RACH in the sub frequency-band can be adopted to transmit other information (such as SRS, uplink data and so on). For instance, it is supposed the time length of a short RACH is T. The time length of the preamble in format 4 in table 1 for an LTE TDD system is $5120 \times T_s$, which is not an integer times of the length of the number of uplink symbol. The first method for allocating RACH resources in the UpPTS is to continuously allocate a plurality of RACH resources in the sub frequency-band for RACH, i.e., the start sample of a latter RACH resource is the one next to the stop sample of the former RACH resource. For instance, the RACH resources are allocated continuously forward starting from the stop position of the UpPTS; or the RACH resources are allocated continuously backward starting from the start position of the UpPTS; or one RACH resource is allocated starting from stop position of the second SCFDMA symbol in UpPTS, and other RACH resource are allocated continuously backward starting from the sampling position next to the stop sample of the second SCFDMA symbol in UpPTS. The second method for allocating RACH resources in UpPTS is to make the RACH resources be accordant with the boundaries of corresponding SCFDMA symbols. For instance, each RACH signal begins to be transmitted at the moment that is T prior to the terminating position of its last SCFDMA symbol; or each RACH signal begins to be transmitted at the moment when its first SCFDMA symbol starts.

The method proposed in present disclosure can be jointly used with method for multiplexing a plurality of RACH resources based on FDM. In this case, the RACH resources are allocated in several sub frequency-bands of the UpPTS and at each sub frequency-band one or more RACH resources is or are allocated. BS can indicate the currently configured RACH resource via the broadcast channel. And the system can predefine some configuration patterns for RACH resource. By indexing said configuration patterns, only the index value is necessary to be transmitted via the broadcast channel.

Figure 6 shows the device with which BS detects the time division multiplexed (TDM) RACH resources. Firstly, the broadcast information (601) for configuring RACH is generated by BS, multiplexed by the physical channel multiplexer (602), and transmitted through the transmitting/receiving means (603); then BS receives the signal through the transmitting/receiving means (603) from UE. The received signal is de-multiplexed through the physical channel de-multiplexer (604) according to the method proposed in present invention. And according to the currently configured RACH resource patterns, BS extracts the random access preamble from the plurality of RACH resources multiplexed in time division mode and detects the extracted random access preamble through module 605.

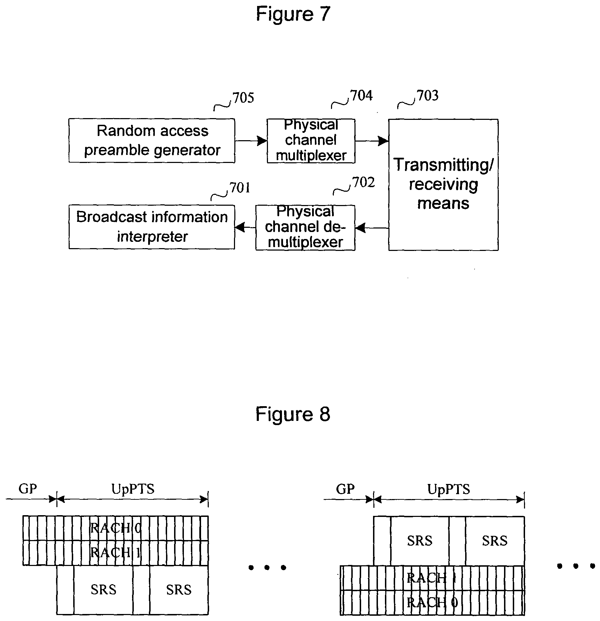

Figure 7 shows the device with which UE transmits TDM RACH resources. Firstly, UE receives signal from BS through the transmitting/receiving means (703). The received signal is de-multiplexed through the physical channel de-multiplexer (702) and the broadcast information (701) for configuring RACH is obtained; then, if it is necessary to transmit the random access preamble, UE selects its occupied RACH resources among the plurality of TDM RACH resources according to currently configured RACH resource pattern and generates the random access preamble in the module 705. After multiplexed by the physical channel multiplexer (704) into the selected RACH resources, the preamble is transmitted through the transmitting/receiving means (703).

**Structure of RACH added with CP**

In format 4 of the random access preamble listed in table 1, the length of CP is zero. To support the processing in the frequency domain, the method based on overlap & add is adopted by BS for receiving the random access preamble. Configuring a general CP frame structure is taken as an example to describe a typical configuration of UpPTS when UpPTS contains two SCFDMA symbols. Suppose the symbol division and CP length setting within the 1ms period formed by the three special domains in the TDD system are just the same as that in other subframes in a TDD system, the UpPTS is $4384 \times T_s$ long in time domain. In format 4, the preamble begins to transmit at the moment that is $5120 \times T_s$ prior to the termination of UpPTS. In this way, RACH signal in the preamble format 4 occupies part of the GP period. Therefore, interference may be easily received from the adjacent BS's downlink signal when the RACH signal is transmitted in preamble format 4. In detail, since the RACH's initial timing is prior to the position of the first symbol in UpPTS, the RACH signal may have been suffered from interference before any other signals transmitted through the frequencies other than those for RACHs in UpPTS are suffered from interference caused by the adjacent BS.

The present disclosure provides a method for configuring the short RACH to solve the interference problem mentioned above. The particular solution is to add CP into a RACH signal, and the structures which are similar to the preamble formats 0~3 in table 1 are utilized. To guarantee that RACH signal's anti-interference performance is not less than that of other signals transmitted through the frequencies other than those for RACH signals in UpPTS, the present invention provides that the starting position of the DFT window with which BS detects the random access preamble is not earlier than the start position of the first valid SCFDMA symbols starts in UpPTS. Here, the start position of the valid SCFDMA symbol refers to the timing of the first SCFDMA sample without considering the CP. Suppose the length of the CP in the first symbol of UpPTS is $C \times T_s$, then the starting position of the DFT window with which BS detects the random access preamble should be delayed at least $C \times T_s$ later than UpPTS's initial timing. Taking the LTE TDD system as an example and supposing the symbol division and CP length setting within the 1ms period formed by the three special domains are just the same as that in other subframes, then according to present LTE TDD subframe structure, C = 160 when UpPTS contains 7 symbols; otherwise, C = 144.

The time lengths of CP and RACH signal's valid sequence can be determined according to such factors as the supported cell coverage and so on. When it is necessary to maintain the design parameters for the preamble format 4, as shown in table 2, one configuration method is to set the time length of the RACH signal's valid sequence as $T_p = 4096 \times T_s$ so as to be accordant with the sequence length of the RACH signal in the preamble format 4. Suppose the RACH structure of the present invention begins to be transmitted at the moment that is $T$ prior to UpPTS's termination position. For instance, we can configure $T = \times 5120 T_s$ in the same mode for configuring the RACH signal in the preamble format 4. And the starting position of the DFT window for the BS detecting the random access preamble starts from the first valid SCFDMA symbol in UpPTS. In this case, the length of CP in RACH signal in present invention is $T_{CP} = T - T_p - t_{cp}$, where $t_{cp}$ denotes the length of the CP in the last symbol of UpPTS. For a general CP frame structure, $t_{cp} = 144 \times T_s$, and the length of CP is $880 \times T_s$.

Table 2: Format of preamble with added CP

| Preamble format | $T_{CP}$ | $T_{SEQ}$ |
|---|---|---|
| × (only applied to frame structure type 2) | $880 \times T_s$ | $4096 \times T_s$ |

With this method, it is possible that the RACH preamble still occupies part of the GP period. However, the signal during such period is not utilized by BS when detecting the random access preamble detecting, the performance on resisting interference caused by adjacent BSs has been improved. With this method, when the start position of the DFT window with which BS detects the random access preamble is the start position of the first valid SCFDMA symbol in UpPTS, the RACH signal experiences no interference until any other signals transmitted through UpPTS suffer from interference. When the start position of the DFT window with which BS detects the random access preamble is later than the start position of the first valid SCFDMA symbol in UpPTS, the RACH signals begin to be interference only after any other signals transmitted through UpPTS have suffered certain interference -.

Examples In this section, four examples of present disclosure are provided. To avoid too tedious description of present patent, detail on well-known function or means is omitted in the following.

The first example

In the example, how to configure a plurality of RACH resources and SRS in the UpPTS is illustrated for present invention. Let's take the system with the bandwidth of 5MHz as an example and suppose UpPTS contains two SCFDMA symbols and no transmission of PUCCH exists in this case. Here suppose that two RACH resources are transmitted in FDM mode in an UpPTS, and the rest resources in UpPTS are adopted to transmit SRS. Since the 5MHz system contains 25 resource blocks (RB) and the bandwidth of each RACH resource occupies 6 RBs, only 13 rest RBs exist in the UpPTS except the resource occupied by RACH.

As shown in figure 8, in the first UpPTS, two RACH resources are continuously allocated from the upper end of the system frequency band, which occupies 12 RBs; and the rest 13 RBs in the system bandwidth are adopted to transmit SRS. In the second UpPTS, two RACH resources are continuously allocated from the lower end of the system frequency band which occupies 12 RBs; and the rest 13 RBs in the system bandwidth are adopted to transmit SRS. As shown in figure 8, the RACH resources in the two UpPTS locate respectively at the two ends of the system frequency band and can obtain superior frequency diversity effect. Meanwhile, the SRS in the two UpPTS covers the entire system frequency band so that the measurement of channel state over the entire system band is well supported. Particularly, this structure can support the transmission of such narrowband SRSs as occupying a bandwidth of 4 RBs or 6 RBs; also, it can support the transmission of such narrowband SRSs as occupying a width of 12 RBs or 13 RBs, i.e., about half of the system bandwidth.

The second example

In this example, the method for configuring a plurality of RACH resources in the preamble format 0 is described for an LTE TDD system. Suppose the RACH channels are allocated in subframe 2 (or subframe 5). Meanwhile, this subframe is adopted to transmit PUCCH. We further suppose that it is necessary for one subframe to transmit two RACH resources. To extend the time length of RACH resource to a plurality of subframes, this example is also suitable for configuring the RACH resources in the preamble formats 1~3.

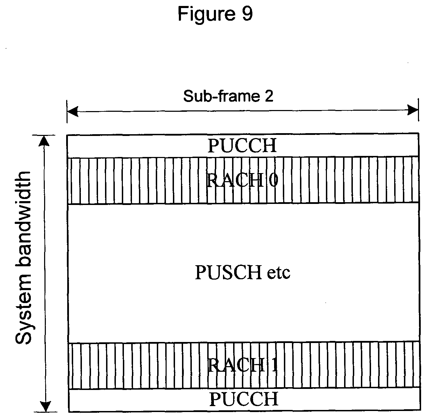

As shown in figure 9, one or more RBs at the two ends of the system frequency band are adopted to transmit PUCCH. The two RACH resources locate in the two ends of the system band respectively and occupy the RBs adjacent to those for PUCCH. Suppose PUCCH occupies k RBs, the system bandwidth contains N RBs. The RBs are indexed from 0, then $k \sim k + 5$ RBs are adopted to transmit one RACH resource; and the $N - k - 6 \sim N - k - 1$ RBs are adopted to transmit the other RACH resource. In this way, the mirror image relationship exists between the two RACH resources with respect to the center of the system bandwidth. So, no affection will be caused to the allocation of resources for frequency hop PUSCH with the mirror image method.

The third example

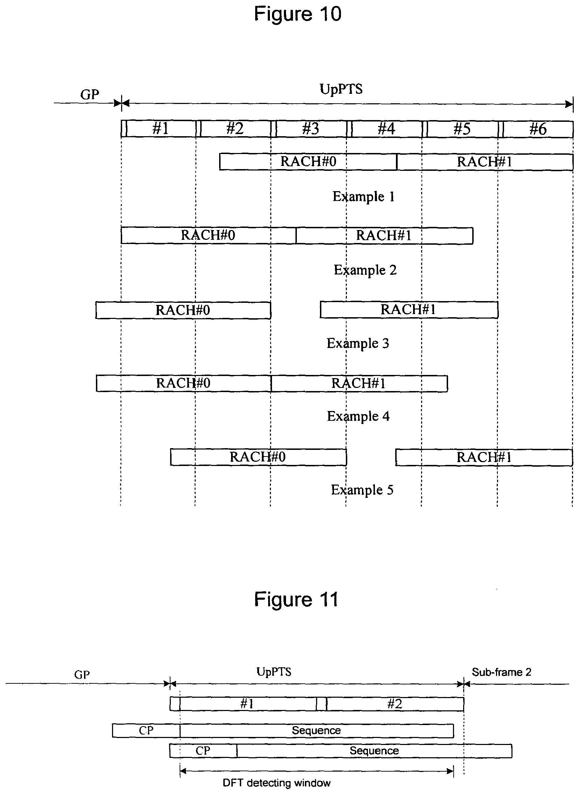

In this example the method for configuring a plurality of RACH resources in UpPTS in a TDM mode is utilized as an example. Suppose the UpPTS contains 6 SCFDMA symbols and the two RACH resources can be accordingly multiplexed together in TDM mode. T denotes the length of time occupied by each RACH resource. For instance, the length of time occupied by the RACH resource in the preamble format 4 in table 1 is $T = 5120 \times T_s$. Figure 10 illustrates the TDM RACH resources. In order to highlight the method for TDM RACH resources, no illustration is done to the usage of frequencies other than those for RACHs in UpPTS.

In the first example of Fig. 10, the two RACH resources are continuously allocated starting from the termination position of UpPTS, viz., the system begins to transmit RACH#1 at the moment that is $T$ prior to the termination position of UpPTS; and the system begins to transmit RACH#0 at the moment that is $2T$ prior to the termination position of UpPTS. Here, the first SCFDMA symbol in the UpPTS is not occupied by RACH and therefore can be adopted to transmit SRS or uplink data and so on.

In the second example of Fig. 10, the two RACH resources are continuously allocated starting from the start position of UpPTS, viz., the system begins to transmit RACH#0 at the moment of the start position of UpPTS; and the system begins to transmit RACH#1 at the moment that is delayed $T$ behind the start position of UpPTS. Here, the last SCFDMA symbol in the UpPTS is not occupied by RACH and therefore can be adopted to transmit SRS or uplink data and so on.

In the third example of Fig. 10, the two RACH resources are allocated starting from the stop position of SCFDMA symbol, viz., the system begins to transmit RACH#0 at the moment that is $T$ prior to the stop position of the second SCFDMA symbol in UpPTS; and the system begins to transmit RACH#1 at the moment that is $T$ prior to the stop position of the fifth SCFDMA symbol in UpPTS. Here, the last SCFDMA symbol in the UpPTS is not occupied by RACH and therefore can be adopted to transmit SRS or uplink data and so on.

In the fourth example of Fig. 10, the two RACH resources are continuously allocated, viz., the system begins to transmit RACH#0 at the moment that is $T$ prior to the stop position of the second SCFDMA symbol in UpPTS; and the system begins to transmit RACH#1 at the moment of the sample position next to the second SCFDMA symbol in UpPTS. Here, the last SCFDMA symbol in the UpPTS is not occupied by RACH and therefore can be adopted to transmit SRS or uplink data and so on.

In the fifth example of Fig. 10, the two RACH resources are allocated both starting from the stop positions of the SCFDMA symbols, viz., the system begins to transmit RACH#0 at the moment that is $T$ prior to the stop position of the third SCFDMA symbol in UpPTS; and the system begins to transmit RACH#1 at the moment that is T prior to the stop position of the sixth SCFDMA symbol in UpPTS.

The fourth example

In this example, the short RACH with an added CP is described as an example. Suppose the UpPTS contains two SCFDMA symbols and the new short RACH structure is the same as the preamble format 4, i.e., the system begins to transmit RACH at the moment that is $5120 \times T_s$ prior to the termination position of UpPTS.

Figure 11 illustrates the configuration on the preamble with CP. With the preamble parameters in table 2, the time length of RACH signal's sequence is $4096 \times T_s$, and the length of CP is $880 \times T_s$. The start position of the DFT with which BS detects random access preamble is the start position of the first valid SCFDMA symbol in UpPTS. With this method, it is possible that the RACH preamble still occupies part of the GP period. However, since the signals within this period is not utilized by BS in the random access preamble detecting, performance on resisting interference caused by adjacent BSs is improved. RACH signal experiences no interference before any other signals transmitted through UpPTS suffer from interference. With this configuration method, it is possible that RACH signal causes interference to the first SCFDMA symbol of subframe 2 (or subframe 6). But this interference level is very low.

**Claims**

1. A base station in a wireless communication system, the base station comprising:

   a transceiver (404) configured to transmit, to a terminal, configuration information, and to receive, from the terminal, signals; and
   a physical channel de-multiplexer (405) configured to de-multiplex the signals, to extract a random access preamble using a first resource based on a random access channel, RACH, resource, and to extract a sounding reference signal, SRS, using a second resource,
   wherein the first resource for the random access preamble does not overlap with the second resource for the SRS in an uplink pilot time slot, UpPTS,
   wherein first resource blocks of the RACH resource corresponding to a first timing are configured at one position of a frequency band and second resource blocks of the RACH resource corresponding to a second timing are configured at other position of the frequency band, and
   wherein the first resource blocks of the RACH resource and the second resource blocks of the RACH resource are determined based on a RACH resource index according to the configuration information.

2. The base station of claim 1, wherein further comprising:

   a random access preamble signal detector (406) configured to detect the extracted random access preamble; and
   an SRS detector (407) configure to detect the extracted SRS.

3. The base station of claim 1, wherein the first resource occupies a bandwidth corresponding to 6 consecutive resource blocks.

4. The base station of claim 1, wherein the random access preamble is received in the UpPTS.

5. The base station of claim 1, wherein a format for the random access preamble received in the UpPTS is 4.

6. A terminal in a wireless communication system, the terminal comprising:

   a transceiver (504) configured to receive, from a base station, configuration information, and to transmit, to the base station, signals;
   a random access preamble generator (506) configured to select a random access channel, RACH, resource, and to identify a random access preamble;
   a sounding reference signal, SRS, generator (507) configured to identify an SRS; and
   a physical channel multiplexer (505) configured to multiplex the random access preamble to a first resource based on the selected RACH resource, to transmit, to the base station via the transceiver, the random access preamble, to multiplex the SRS to a second resource, and to transmit, to the base station via the transceiver, the SRS,
   wherein the first resource for the random access preamble does not overlap with the second resource for the SRS in an uplink pilot time slot, UpPTS,
   wherein first resource blocks of the RACH resource corresponding to a first timing are configured at one position of a frequency band and second resource blocks of the RACH resource corresponding to a second timing are configured at other position of the frequency band, and
   wherein the first resource blocks of the RACH resource and the second resource blocks of the RACH resource are determined based on a RACH resource index according to the configuration information.

7. The terminal of claim 6, wherein the first resource occupies a bandwidth corresponding to 6 consecutive resource blocks.

8. The terminal of claim 6, wherein the random access preamble is transmitted in the UpPTS.

9. The terminal of claim 6, wherein a format for the random access preamble transmitted in the UpPTS is 4.

10. A method performed by a base station in a wireless communication system, the method comprising:

    transmitting, to a terminal, configuration information;

receiving, from the terminal, signals;

extracting a random access preamble using a first resource based on a random access channel, RACH, resource; and

extracting a sounding reference signal, SRS, using a second resource,

wherein the first resource for the random access preamble does not overlap with the second resource for the SRS in an uplink pilot time slot, UpPTS,

wherein first resource blocks of the RACH resource corresponding to a first timing are configured at one position of a frequency band and second resource blocks of the RACH resource corresponding to a second timing are configured at other position of the frequency band, and

wherein the first resource blocks of the RACH resource and the second resource blocks of the RACH resource are determined based on a RACH resource index according to the configuration information.

11. The method of claim 10, wherein further comprising:

detecting the extracted random access preamble; and
detecting the extracted SRS.

12. The method of claim 10, wherein the first resource occupies a bandwidth corresponding to 6 consecutive resource blocks.

13. The method of claim 10, wherein the random access preamble is received in the UpPTS.

14. The method of claim 10, wherein a format for the random access preamble received in the UpPTS is 4.

15. A method performed by a terminal in a wireless communication system, the method comprising:

receiving, from a base station, configuration information;

selecting a random access channel, RACH, resource;

identifying a random access preamble and multiplexing the random access preamble to a first resource based on the selected RACH resource;

transmitting, to the base station, the random access preamble;

identifying a sounding reference signal, SRS, and multiplexing the SRS to a second resource; and

transmitting, to the base station, the SRS,

wherein the first resource for the random access preamble does not overlap with the second resource for the SRS in an uplink pilot time slot, UpPTS,

wherein first resource blocks of the RACH resource corresponding to a first timing are configured at one position of a frequency band and second resource blocks of the RACH resource corresponding to a second timing are configured at other position of the frequency band, and

wherein the first resource blocks of the RACH resource and the second resource blocks of the RACH resource are determined based on a RACH resource index according to the configuration information.

16. The method of claim 15, wherein the first resource occupies a bandwidth corresponding to 6 consecutive resource blocks.

17. The method of claim 15, wherein the random access preamble is transmitted in the UpPTS.

18. The method of claim 15, wherein a format for the random access preamble transmitted in the UpPTS is 4.

**Patentansprüche**

1. Basisstation in einem drahtlosen Kommunikationssystem, wobei die Basisstation umfasst:

einen Sendeempfänger (404), der dazu eingerichtet ist, Konfigurationsinformationen an ein Endgerät zu senden und Signale von dem Endgerät zu empfangen; und

einen physikalischen Kanal-Demultiplexer (405), der dazu eingerichtet ist, die Signale zu demultiplexieren, um eine Direktzugriffspräambel unter Verwendung einer ersten Ressource auf der Grundlage einer Direktzugriffskanal-, RACH-, Ressource zu extrahieren, und um ein Sondier-Referenzsignal (SRS) unter Verwendung einer zweiten Ressource zu extrahieren,

wobei sich die erste Ressource für die Direktzugriffspräambel nicht mit der zweiten Ressource für das SRS in einem Uplink-Pilotzeitschlitz, UpPTS, überschneidet,

erste Ressourcenblöcke der RACH-Ressource, die einer ersten Zeitgabe entsprechen, an einer Position eines Frequenzbandes konfiguriert sind und zweite Ressourcenblöcke der RACH-Ressource, die einer zweiten Zeitgabe entsprechen, an einer anderen Position des Frequenzbandes konfiguriert sind, und

die ersten Ressourcenblöcke der RACH-Ressource sowie die zweiten Ressourcenblöcke der RACH-Ressource auf der Grundlage eines RACH-Ressourcenindex gemäß den Konfigurationsinformationen bestimmt werden.

2.  Basisstation nach Anspruch 1, weiterhin umfassend:

einen Direktzugriffspräambel-Signaldetektor (406), der dazu eingerichtet ist, die extrahierte Direktzugriffspräambel zu erfassen; und

einen SRS-Detektor (407), der dazu eingerichtet ist, das extrahierte SRS zu erfassen.

3.  Basisstation nach Anspruch 1, bei der die erste Ressource eine Bandbreite belegt, die 6 aufeinanderfolgenden Ressourcenblöcken entspricht.

4.  Basisstation nach Anspruch 1, bei der die Direktzugriffspräambel in dem UpPTS empfangen wird.

5.  Basisstation nach Anspruch 1, bei der ein Format für die in dem UpPTS empfangene Direktzugriffspräambel 4 ist.

6.  Endgerät in einem drahtlosen Kommunikationssystem, wobei das Endgerät umfasst:

einen Sendeempfänger (504), der dazu eingerichtet ist, von einer Basisstation Konfigurationsinformationen zu empfangen und Signale an die Basisstation zu senden;

einen Direktzugriffspräambel-Generator (506), der dazu eingerichtet ist, eine Direktzugriffskanal-, RACH-, Ressource auszuwählen und eine Direktzugriffspräambel zu identifizieren;

einen Generator (507) für ein Sondierungsreferenzsignal (SRS), der dazu eingerichtet ist, ein SRS zu identifizieren; und

einen physikalischen Kanalmultiplexer (505), der dazu eingerichtet ist, die Direktzugriffspräambel auf eine erste Ressource auf der Grundlage der ausgewählten RACH-Ressource zu multiplexieren, um die Direktzugriffspräambel über den Sendeempfänger an die Basisstation zu senden, um das SRS auf eine zweite Ressource zu multiplexieren, und um das SRS über den Sendeempfänger an die Basisstation zu senden,

wobei sich die erste Ressource für die Direktzugriffspräambel nicht mit der zweiten Ressource für das SRS in einem Uplink-Pilotzeitschlitz, UpPTS, überschneidet,

erste Ressourcenblöcke der RACH-Ressource, die einer ersten Zeitgabe entsprechen, an einer Position eines Frequenzbandes konfiguriert sind und zweite Ressourcenblöcke der RACH-Ressource, die einer zweiten Zeitgabe entsprechen, an einer anderen Position des Frequenzbandes konfiguriert sind, und

die ersten Ressourcenblöcke der RACH-Ressource sowie die zweiten Ressourcenblöcke der RACH-Ressource auf der Grundlage eines RACH-Ressourcenindex gemäß den Konfigurationsinformationen bestimmt werden.

7.  Endgerät nach Anspruch 6, bei dem die erste Ressource eine Bandbreite belegt, die 6 aufeinanderfolgenden Ressourcenblöcken entspricht.

8.  Endgerät nach Anspruch 6, bei dem die Direktzugriffspräambel in dem UpPTS gesendet wird.

9.  Endgerät nach Anspruch 6, bei dem ein Format für die in dem UpPTS gesendete Direktzugriffspräambel 4 ist.

10. Verfahren, das von einer Basisstation in einem drahtlosen Kommunikationssystem ausgeführt wird, wobei das Verfahren umfasst:

Senden von Konfigurationsinformationen an ein Endgerät;

Empfang von Signalen von dem Endgerät;

Extrahieren einer Direktzugriffspräambel unter Verwendung einer ersten Ressource, die auf einer Direktzugriffskanal-, RACH-, Ressource basiert; und

Extrahieren eines Sondierungsreferenzsignals, SRS, unter Verwendung einer zweiten Ressource,

wobei sich die erste Ressource für die Direktzugriffspräambel nicht mit der zweiten Ressource für das SRS in einem Uplink-Pilotzeitschlitz, UpPTS, überschneidet,
erste Ressourcenblöcke der RACH-Ressource, die einer ersten Zeitgabe entsprechen, an einer Position eines Frequenzbandes konfiguriert sind und zweite Ressourcenblöcke der RACH-Ressource, die einer zweiten Zeitgabe entsprechen, an einer anderen Position des Frequenzbandes konfiguriert sind, und
die ersten Ressourcenblöcke der RACH-Ressource sowie die zweiten Ressourcenblöcke der RACH-Ressource auf der Grundlage eines RACH-Ressourcenindex gemäß den Konfigurationsinformationen bestimmt werden.

11. Verfahren nach Anspruch 10, weiterhin umfassend:

Erfassen der extrahierten Direktzugriffspräambel; und
Erfassen des extrahierten SRS.

12. Verfahren nach Anspruch 10, bei dem die erste Ressource eine Bandbreite belegt, die 6 aufeinanderfolgenden Ressourcenblöcken entspricht.

13. Verfahren nach Anspruch 10, bei dem die Direktzugriffspräambel in dem UpPTS empfangen wird.

14. Verfahren nach Anspruch 10, bei dem ein Format für die in dem UpPTS empfangene Direktzugriffspräambel 4 ist.

15. Verfahren, das von einem Endgerät in einem drahtlosen Kommunikationssystem ausgeführt wird, wobei das Verfahren umfasst:

Empfangen von Konfigurationsinformationen von einer Basisstation;
Auswählen einer Direktzugriffskanal-, RACH-, Ressource;
Identifizieren einer Direktzugriffspräambel und Multiplexieren der Direktzugriffspräambel zu einer ersten Ressource auf der Grundlage der ausgewählten RACH-Ressource;
Senden der Direktzugriffspräambel an die Basisstation;
Identifizieren eines Sondierungsreferenzsignals, SRS, und Multiplexieren des SRS zu einer zweiten Ressource; und
Senden des SRS an die Basisstation,
wobei sich die erste Ressource für die Direktzugriffspräambel nicht mit der zweiten Ressource für das SRS in einem Uplink-Pilotzeitschlitz, UpPTS, überschneidet,
erste Ressourcenblöcke der RACH-Ressource, die einer ersten Zeitgabe entsprechen, an einer Position eines Frequenzbandes konfiguriert sind und zweite Ressourcenblöcke der RACH-Ressource, die einer zweiten Zeitgabe entsprechen, an einer anderen Position des Frequenzbandes konfiguriert sind, und
die ersten Ressourcenblöcke der RACH-Ressource sowie die zweiten Ressourcenblöcke der RACH-Ressource auf der Grundlage eines RACH-Ressourcenindex gemäß den Konfigurationsinformationen bestimmt werden.

16. Verfahren nach Anspruch 15, bei dem die erste Ressource eine Bandbreite belegt, die 6 aufeinanderfolgenden Ressourcenblöcken entspricht.

17. Verfahren nach Anspruch 15, bei dem die Direktzugriffspräambel in dem UpPTS gesendet wird.

18. Verfahren nach Anspruch 15, bei dem ein Format für die in dem UpPTS gesendete Direktzugriffspräambel 4 ist.

**Revendications**

1. Station de base dans un système de communication sans fil, la station de base comprenant :

un émetteur-récepteur (404) configuré pour transmettre à un terminal des informations de configuration, et pour recevoir du terminal des signaux ; et
un démultiplexeur de canaux physiques (405) configuré pour démultiplexer les signaux, pour extraire un préambule d'accès aléatoire en utilisant une première ressource basée sur une ressource de canal à accès aléatoire, soit RACH (*random access channel*), et pour extraire un signal de référence de sondage, soit SRS (*sounding reference signal*), en utilisant une seconde ressource,
dans lequel la première ressource correspondant au préambule d'accès aléatoire ne chevauche pas la seconde ressource correspondant au SRS dans un créneau horaire pilote de liaison montante, soit UpPTS (*uplink pilot*

*time slot*),
dans lequel des premiers blocs de ressources de la ressource RACH correspondant à un premier minutage sont configurés à une position d'une bande de fréquences et des seconds blocs de ressources de la ressource RACH correspondant à un second minutage sont configurés à une autre position de la bande de fréquences, et dans lequel les premiers blocs de ressources de la ressource RACH et les seconds blocs de ressources de la ressource RACH sont déterminés sur la base d'un indice de ressources RACH conformément aux informations de configuration.

**2.** Station de base selon la revendication 1, comprenant en outre :

un détecteur de signal de préambule d'accès aléatoire (406) configuré pour détecter le préambule d'accès aléatoire extrait ; et
un détecteur SRS (407) configuré pour détecter le SRS extrait.

**3.** Station de base selon la revendication 1, dans laquelle la première ressource occupe une largeur de bande correspondant à 6 blocs de ressources consécutifs.

**4.** Station de base selon la revendication 1, dans laquelle le préambule d'accès aléatoire est reçu dans l'UpPTS.

**5.** Station de base selon la revendication 1, dans laquelle un format pour le préambule d'accès aléatoire reçu dans l'UpPTS est le format de préambule 4.

**6.** Terminal dans un système de communication sans fil, le terminal comprenant :

un émetteur-récepteur (504) configuré pour recevoir, depuis une station de base,
des informations de configuration et pour transmettre à la station de base des signaux ;
un générateur de préambule d'accès aléatoire (506) configuré pour sélectionner une ressource de canal à accès aléatoire, RACH, et pour identifier un préambule d'accès aléatoire ;
un générateur de signal de référence de sondage, SRS, (507) configuré pour identifier un SRS ; et
un multiplexeur de canaux physiques (505) configuré pour multiplexer le préambule d'accès aléatoire sur une première ressource basée sur la ressource RACH sélectionnée, pour transmettre à la station de base, par le biais de l'émetteur-récepteur, le préambule d'accès aléatoire, pour multiplexer le SRS sur une seconde ressource, et pour transmettre à la station de base, par le biais de l'émetteur-récepteur, le SRS,
dans lequel la première ressource correspondant au préambule d'accès aléatoire ne chevauche pas la seconde ressource correspondant au SRS dans un créneau horaire pilote de liaison montante, UpPTS,
dans lequel des premiers blocs de ressources de la ressource RACH correspondant à un premier minutage sont configurés à une position d'une bande de fréquences et des seconds blocs de ressources de la ressource RACH correspondant à un second minutage sont configurés à une autre position de la bande de fréquences, et dans lequel les premiers blocs de ressources de la ressource RACH et les seconds blocs de ressources de la ressource RACH sont déterminés sur la base d'un indice de ressources RACH conformément aux informations de configuration.

**7.** Terminal selon la revendication 6, dans lequel la première ressource occupe une largeur de bande correspondant à 6 blocs de ressources consécutifs.

**8.** Terminal selon la revendication 6, dans lequel le préambule d'accès aléatoire est transmis dans l'UpPTS.

**9.** Terminal selon la revendication 6, dans lequel un format pour le préambule d'accès aléatoire transmis dans l'UpPTS est le format de préambule 4.

**10.** Procédé exécuté par une station de base dans un système de communication sans fil, le procédé comprenant :

la transmission, à un terminal, d'informations de configuration ;
la réception, depuis le terminal, de signaux ;
l'extraction d'un préambule d'accès aléatoire en utilisant une première ressource basée sur une ressource de canal à accès aléatoire, RACH; et
l'extraction d'un signal de référence de sondage, SRS, en utilisant une seconde ressource,
dans lequel la première ressource correspondant au préambule d'accès aléatoire ne chevauche pas la seconde ressource correspondant au SRS dans un créneau horaire pilote de liaison montante, UpPTS,
dans lequel des premiers blocs de ressources de la ressource RACH correspondant à un premier minutage sont configurés à une position d'une bande de fréquences et des seconds blocs de ressources de la ressource RACH correspondant à un second minutage sont configurés à une autre position de la bande de fréquences, et dans lequel les premiers blocs de ressources de la ressource RACH et les seconds blocs de ressources de la ressource RACH sont déterminés sur la base d'un indice de ressources RACH conformément aux informations de configuration.

**11.** Procédé selon la revendication 10, comprenant en outre :

la détection du préambule d'accès aléatoire extrait ; et
la détection du SRS extrait.

**12.** Procédé selon la revendication 10, dans lequel la première ressource occupe une bande de fréquences correspondant à 6 blocs de ressources consécutifs.

**13.** Procédé selon la revendication 10, dans lequel le préambule d'accès aléatoire est reçu dans l'UpPTS.

**14.** Procédé selon la revendication 10, dans lequel un format pour le préambule d'accès aléatoire reçu dans l'UpPTS est le format de préambule 4.

**15.** Procédé exécuté par un terminal dans un système de communication sans fil, le procédé comprenant :

la réception, depuis une station de base, d'informations de configuration ;
la sélection d'une ressource de canal à accès aléatoire, RACH ;
l'identification d'un préambule d'accès aléatoire et le multiplexage du préambule d'accès aléatoire sur une première ressource basée sur la ressource RACH sélectionnée ;
la transmission, à la station de base, du préambule d'accès aléatoire ;
l'identification d'un signal de référence de sondage, SRS, et le multiplexage du SRS sur une seconde ressource ; et
la transmission, à la station de base, du SRS,
dans lequel la première ressource correspondant au préambule d'accès aléatoire ne chevauche pas la seconde ressource correspondant au SRS dans un créneau horaire pilote de liaison montante, UpPTS,
dans lequel des premiers blocs de ressources de la ressource RACH correspondant à un premier minutage sont configurés à une position d'une bande de fréquences et des seconds blocs de ressources de la ressource RACH correspondant à un second minutage sont configurés à une autre position de la bande de fréquences, et dans lequel les premiers blocs de ressources de la ressource RACH et les seconds blocs de ressources de la ressource RACH sont déterminés sur la base d'un indice de ressources RACH conformément aux informations de configuration.

**16.** Procédé selon la revendication 15, dans lequel la première ressource occupe une largeur de bande correspondant à 6 blocs de ressources consécutifs.

**17.** Procédé selon la revendication 15, dans lequel le préambule d'accès aléatoire est transmis dans l'UpPTS.

**18.** Procédé selon la revendication 15, dans lequel un format pour le préambule d'accès aléatoire transmis dans l'UpPTS est le format de préambule 4.

Figure 1

Figure 2

# Figure 3

frequency

| 0 | 1 | 2 | 3 | 4 | 5 | 6 | 7 | 8 | 9 |

10ms radio frame

☐ PUSCH     ▓ PUCCH     ⊞ RACH

# Figure 4

Random access
preamble detector    406

SRS detector    407

Physical
channel
de-
multiplex
er    405

Broadcast
information generator    401

SRS configuration
information generator    402

Physical
channel
multiplex
er    403

Transmittin
g/receiving
means    404

# Figure 5

# Figure 6

# Figure 7

# Figure 8

# Figure 9

Sub-frame 2

System bandwidth

PUCCH

RACH 0

PUSCH etc

RACH 1

PUCCH

## Figure 10

## Figure 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20070291696 A1

### Non-patent literature cited in the description

- 3rd Generation Partnership Project: Technical Specification Group Radio Access Network; Evolved Universal Terrestrial Radio Access, E-UTRA; Physical channels and Modulation (Release 8). *3Gpp TS 36.211 V8. 1-0,* 01 November 2007, 1-54
- **CMCC et al.** Way Forward on LTE TDD Frame Structure. *3GPP DRAFT; R1-075020, 3rd Generation Partnership Project, 3GPP,* 06 November 2007, vol. RAN WG1 (Korea), 20071106
- **TEXAS INSTRUMENTS.** Interference between Sounding Reference Signal and Random Access Preamble. *3GPP DRAFT; R1-074676, 3rd Generation Partnership Project, 3GPP,* 30 October 2007, vol. RAN WG1 (Korea), 20071030
- **MOTOROLA.** RACH Frequency Hopping Pattern. *3GPP DRAFT, R1-074606, 3rd Generation Partnership Project, 3GPP,* 30 October 2007, vol. RAN WG1 (Korea), 20071030